# EUROPÄISCHE PATENTSCHRIFT

(11) **EP 1 089 528 B1**
(45) Veröffentlichungstag und Bekanntmachung des Hinweises auf die Patenterteilung: **21.12.2005**
(21) Anmeldenummer: 00120013.8
(22) Anmeldetag: 14.09.2000
(51) Int. Cl.: G06F 11/07

(54) **Verfahren zur Behandlung von als gestört gemeldeten peripheren Einheiten in einem Kommunikationssystem**
Method for treatment of faulty reported peripheral units in a communications system
Procédé de traitement des unités périphériques défectueuses dans un systéme de communication

(30) Priorität: 30.09.1999 DE 19947135
(43) Veröffentlichungstag der Anmeldung: 04.04.2001
(73) Patentinhaber: SIEMENS AKTIENGESELLSCHAFT, 80333 München (DE)
(72) Erfinder: Oberhauser, Walter, 82515 Wolfratshausen (DE)

(56) Entgegenhaltungen:
- DE-U1- 9 202 641

## Beschreibung

Verfahren zur automatischen Wiederinbetriebnahme dienen in Kommunikationssystemen dazu, gestörte Baugruppen, Sätze und Endgeräte durch einen Inbetriebnahmeversuch möglichst schnell wieder in Betrieb zu setzen, um die eventuelle Ausfallzeiten zu minimieren. Schwerwiegende Hardwaredefekte können durch derartige Verfahren zwar nicht beseitigt werden, wohl aber Störungen, die nach einem Neustart der betroffenen Einheit behoben sind. Solche Störungen können beispielsweise durch Wartungs- und Instandhaltungsarbeiten am Kommunikationssystem hervorgerufen werden. Bei den bisher vorgeschlagenen Verfahren, wie beispielsweise im deutschen Gebranchsmuster DE 92 02 641 41 offenbart, werden die von einer Störung betroffenen peripheren Einheiten wie Baugruppen, Sätze und Endgeräte für eine bestimmte Zeit gesperrt und danach wieder in Betrieb genommen. Im Anschluß an die Wiederinbetriebnahme werden die betroffenen Einheiten für eine bestimmte Zeitdauer einer intensiven Überwachung unterzogen. Eine endgültige Inbetriebnahme erfolgt, wenn während dieser Überwachungszeit keine weitere Störung auftritt. Andernfalls wird die periphere Einheit endgültig gesperrt. Der Zweck der Sperrzeit besteht darin, bei einem gehäuften Auftreten gleichartiger Störungen jeweils nur die erste Störung auszufiltern. Durch die Überwachungszeit ist eine ausreichende Systemstabilität nach der Wiederinbetriebnahme gewährleistet. Insbesondere in der Peripherie von Schalteinheiten werden durch die bekannten Verfahren zur Wiederinbetriebnahme Baugruppen, Anschlußeinheiten und Endgeräte häufig zu früh endgültig durch die Sicherheitstechnik gesperrt.

Der Erfindung liegt die Aufgabe zugrunde, ein Verfahren zu schaffen, welches eine schnellstmögliche Wiederinbetriebnahme von temporär gestörten peripheren Einheiten in Kommunikationssystemen erlaubt.

Diese Aufgabe wird durch das erfindungsgemäße Verfahren gemäß den Merkmalen des Anspruchs 1 gelöst.

Das erfindungsgemäße Verfahren ermöglicht eine erhebliche Entlastung der Betriebstechnik aufgrund der reduzierten Notwendigkeit manueller Inbetriebnahmen gestörter Geräte. Auch die Ausfallzeiten sind sehr gering gegenüber manuellen Inbetriebnahmeversuchen durch ein Servicezentrum. Ein Nebeneffekt der erhöhten Verfügbarkeit sind die geringeren Teilnehmerbeschwerden, beispielsweise wegen ausgefallener Endgeräte oder Leitungsverbindungen. Die Wiederinbetriebnahme mittels des erfindungsgemäßen Verfahrens ist grundsätzlich für alle peripheren Anschlußeinheiten, Baugruppen, Schaltkreise und Endgeräte möglich. Des weiteren werden dauerhaft gestörte periphere Einheiten dadurch erkannt, daß sie nach Beendigung des Wiederinbetriebnahmeverfahrens nicht in Betrieb gehen.

Vorteilhafte Weiterbildungen des erfindungsgemäßen Verfahrens sind in den abhängigen Ansprüchen 2 bis 10 angegeben.

Für die Dauer der Sperrphasen innerhalb der Hierarchieebenen Anschlußeinheit, Baugruppe, Schaltkreis und Endgerät werden vorzugsweise jeweils eigene hierarchieebenenspezifische Zeitserien verwendet. In einigen Fällen kann es jedoch sinnvoll sein, die Dauer der Sperrphasen und der Überwachungsphasen für alle in Betrieb zu nehmenden peripheren Einheiten zentral zu normieren. Dies bietet den Vorteil, daß eine Anpassung an spezielle Fehlersituationen einzelner Geräte oder Gerätegruppen entfallen kann, da innerhalb der maximal möglichen Inbetriebnahmeversuche nach einem fehlgeschlagenen Inbetriebnahmeversuch der nächste folgt.

In einer Ausgestaltung des erfindungsgemäßen Verfahrens werden auch periphere Einheiten berücksichtigt, die bei Überlauf eines einer Fehleranalyseeinrichtung zugeordneten Störungsstatistikzählers gesperrt werden. Der Störungsstatistikzähler sollte dabei nach jeder endgültigen Inbetriebnahme zurückgesetzt werden. Die Kopplung zu Störungsstatistikzählern ermöglicht eine Eindämmung von Meldungsfluten bei Störungen in Kommunikationssystemen.

Der Start der Wiederinbetriebnahmeprozedur kann auch auf Veranlassung einer Routineprüfsteuerung, welche Hintergrundtests für regelmäßige Überprüfungen von Hardwarefunktionen durchführt, nach negativen Testresultaten erfolgen. Außerdem können auch periphere Einheiten berücksichtigt werden, die durch eine zentrale Geräteverwaltung direkt gesperrt werden.

In einer vorteilhaften Weiterbildung wird vor dem Start der Wiederinbetriebnahmeprozedur geprüft, ob die wieder in Betrieb zu nehmenden peripheren Einheiten überhaupt für eine automatische Wiederinbetriebnahme qualifiziert sind. So lassen sich Sonderbaugruppen von der Behandlung durch das erfindungsgemäße Verfahren ausschließen, soweit dies aus Gründen der Betriebsführung notwendig ist. Des weiteren kann nach Beendigung der Sperrphase eine Statusprüfung der wieder in Betrieb zu nehmenden Einheiten erfolgen. Falls diese Überprüfung den Status "gesperrt" ergibt, wird nachfolgend die Überwachungsphase eingeleitet. Andernfalls werden die peripheren Einheiten endgültig außer Betrieb genommen. In entsprechender Weise kann auch nach Beendigung der Überwachungsphase eine Statusüberprüfung erfolgen. Die peripheren Einheiten werden nur genau dann wieder in Betrieb genommen, falls sie sich im Status "betriebsbereit" befinden. Ansonsten bleiben sie in dem Zustand wie bisher und werden aus einer Verwaltungsliste gelöscht.

Die Erfindung wird nachfolgend an Ausführungsbeispielen anhand der Zeichnung näher erläutert. Es zeigt
Figur 1 ein Ablaufdiagramm für ein erfindungsgemäßes Verfahren mit einigen vorteilhaften Ausgestaltungen,
Figur 2 ein Zustands-Zeit-Diagramm für eine wieder in Betrieb zu nehmende periphere Einheit bei einer erfolgreichen Inbetriebnahme und
Figur 3 ein Zustands-Zeit-Diagramm bei einem fehlgeschlagenen ersten Reaktivierungsversuch.

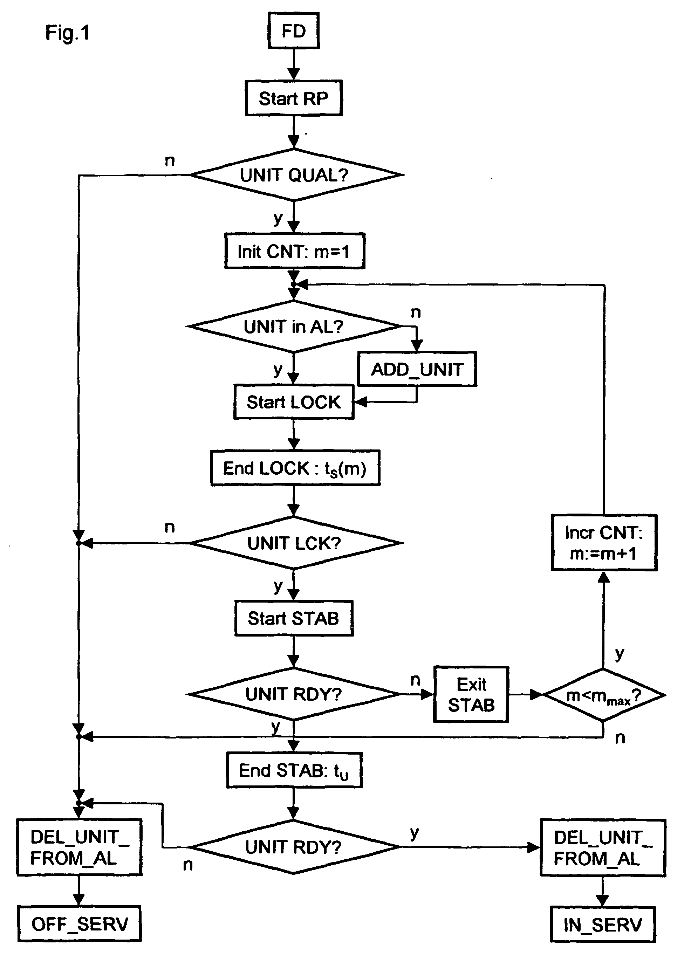

Den Ausgangspunkt des in Figur 1 dargestellten Ablaufdiagrammes bildet eine Fehlererkennung FD, beispielsweise durch eine Routineüberprüfungssteuerung. Eine betroffene periphere Einheit wird dann von einer Wiederinbetriebnahmeprozedur RP behandelt. Nach Start der Wiederinbetriebnahmeprozedur RP erfolgt eine Prüfung UNIT QUAL, ob die wieder in Betrieb zu nehmende periphere Einheit für eine automatische Wiederinbetriebnahme qualifiziert ist. Bei negativem Ergebnis erfolgt eine endgültige Außerbetriebnahme OFF_SERV. Andernfalls wird ein Wiederholungszähler CNT zur Erfassung der Anzahl von Inbetriebnahmeversuchen initialisiert. Der Wert des Wiederholungszählers CNT wird dabei auf den Wert 1 gesetzt. Nachfolgend wird überprüft, ob die Einheit in eine Verwaltungsliste AL zur Erfassung parallel in Betrieb zu nehmender peripherer Einheiten eingetragen ist. Dies bietet den Vorteil, daß die Anzahl der gleichzeitig wieder in Betrieb zu nehmenden peripheren Einheiten erfaßt werden kann. Dadurch können die Auswirkungen auf die Systemdynamik abgeschätzt werden. Gegebenenfalls führt dies dazu, daß die Anzahl der parallel wieder in Betrieb zu nehmenden peripheren Einheiten begrenzt wird.

Falls die Einheit noch nicht in der Verwaltungsliste vorhanden ist, wird eine Ergänzung ADD_UNIT vorgenommen. Anschließend wird eine Sperrphase LOCK eingeleitet, deren Dauer tₛ vom Wert m des Wiederholungszählers CNT abhängig ist. Sperren bedeutet die temporäre Außerbetriebnahme der peripheren Einheit. Nach Beendigung der Sperrphase LOCK wird der Status der wieder in Betrieb zu nehmenden peripheren Einheit überprüft. Falls sich die Einheit in einem gesperrten Zustand LCK befindet, wird eine Stabilisierungsphase STAB eingeleitet, deren Dauer t_{U} unabhängig vom Wert m des Wiederholungszählers CNT ist. Falls die Statusüberprüfung nach Abschluß der Sperrphase LOCK ergibt, daß sich der Status der peripheren Einheit in betriebsbereit geändert hat oder wenn die Einheit in der Zwischenzeit demontiert wurde, erfolgt eine Streichung DEL_UNIT_FROM_AL der Einheit aus der Verwaltungsliste AL.

Während der Überwachungsphase STAB wird permanent geprüft, ob sich die wieder in Betrieb zu nehmende periphere Einheit in einem betriebsbereiten Zustand RDY befindet. Falls dies nicht der Fall ist, wird die Überwachungsphase STAB abgebrochen. Nachfolgend muß überprüft werden, ob ein Schwellwert mₘₐₓ für maximale Inbetriebnahmeversuche bereits überschritten ist. Ist dies der Fall, so wird die periphere Einheit endgültig außer Betrieb gesetzt. Ansonsten wird der Wert m des Wiederholungszählers CNT inkrementiert und eine neue Sperrphase LOCK gestartet.

Tritt hingegen während der Überwachungsphase STAB keine weitere Störung auf und ist der Status der peripheren Einheit auch nach Abschluß der Überwachungsphase betriebsbereit RDY, so erfolgt die endgültige Inbetriebnahme IN_SERV. Ergibt die Statusabfrage nach Beendigung der Überwachungsphase STAB jedoch, daß die periphere Einheit nicht betriebsbereit ist, so wird sie aus der Verwaltungsliste AL gelöscht.

Der Schwellwert für Inbetriebnahmeversuche sowie die Dauer der Sperr- und Überwachungsphasen kann während der Wiederinbetriebnahmeprozedur angepaßt werden. Durch Einrichtung von anfänglich kurzen und stetig länger werdenden Sperrphasen kann die Anzahl der Inbetriebnahmeversuche entsprechend der Ausfallwahrscheinlichkeit einer Anschlußeinheit, einer Baugruppe, eines Schaltgerätes oder eines Endgerätes optimiert werden. Eine derartige Staffelung der Inbetriebnahmeversuche sorgt im Regelfall dafür, wieder in Betrieb zu nehmende periphere Einheiten auch nach umfangreicheren Wartungstätigkeit wieder automatisch in Betrieb nehmen zu können. Dauerhaft gestörte Einheiten werden jedoch entsprechend dem Schwellwert für maximal zulässige Inbetriebnahmeversuche endgültig außer Betrieb gesetzt.

Für die ersten Inbetriebnahmeversuche sollten relativ kurze Sperrphasen vorgesehen werden, um einerseits unnötig hohe Ausfallzeiten für die Nutzer zu vermeiden und andererseits redundante Alarmmeldungen zu unterdrücken. Dies kann beispielsweise dadurch erreicht werden, daß die Dauer der ersten drei Sperrphasen jeweils kürzer als eine Validierungszeit für eine Alarmauslösung ist. Im allgemeinen kann die Dauer der Sperrphasen zwischen 1 Minute und 60 Minuten und die Dauer der Überwachungsphasen zwischen 10 Minuten und 30 Minuten liegen. Bei Alarmmeldungen betragen die Validierungszeiten häufig etwa 10 Minuten. Des weiteren sollte der Schwellwert für die maximal möglichen Inbetriebnahmeversuche auf 8 begrenzt werden. Eine Vereinfachung bei der Implementierung eines Wiederinbetriebnahmeverfahrens ergibt sich, wenn die Dauer der Überwachungsphasen unabhängig von der Anzahl der Inbetriebnahmeversuche ist.

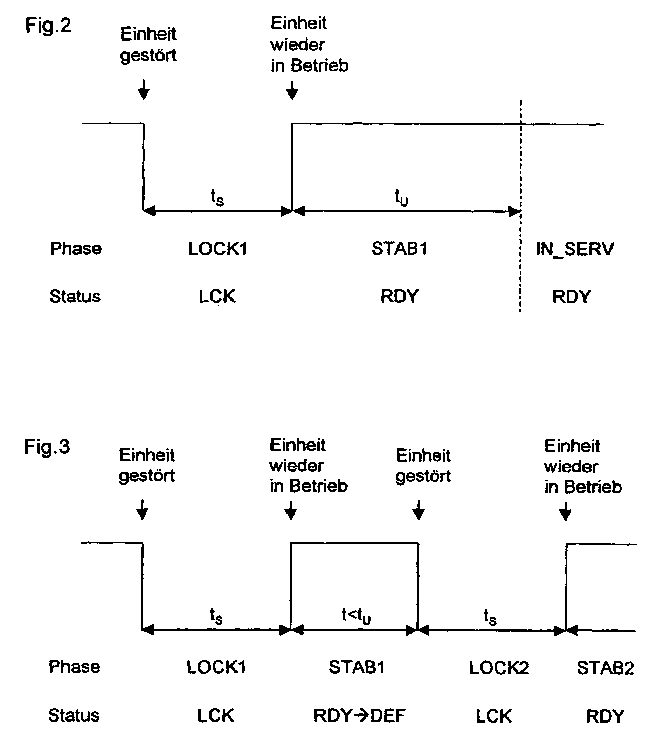

Figur 2 dient der Veranschaulichung des zeitlichen Ablaufes bei einer erfolgreichen Wiederinbetriebnahme nach nur einem Inbetriebnahmeversuch. Ausgangspunkt ist eine als gestört gemeldete periphere Einheit, worauf die Wiederinbetriebnahmeprozedur RP gestartet wird. Zunächst wird die Sperrphase LOCK1 eingeleitet. Während der Sperrphase LOCK1 befindet sich die wieder in Betrieb zu nehmende Einheit im Zustand gesperrt LCK. Diese Bedingung wird über die gesamte Dauer der Sperrphase LOCK1 eingehalten, so daß danach der Übergang zur Überwachungsphase STAB1 erfolgt.

Während der Überwachungsphase STAB1 wird die periphere Einheit vorläufig wieder in Betrieb genommen. Im vorliegenden Fall behält die periphere Einheit während der gesamten Überwachungsphase STAB1 den Zustand betriebsbereit RDY, so daß nach Ablauf der Überwachungsphase STAB1 eine endgültige Wiederinbetriebnahme IN_SERV erfolgen kann.

In Figur 3 ist der zeitliche Ablauf bei einem fehlgeschlagenen ersten Reaktivierungsversuch dargestellt. Auch hier wird die Wiederinbetriebnahmeprozedur RP aufgrund einer als gestört erkannten peripheren Einheit gestartet. Nach Beendigung einer ersten Sperrphase LOCK1 wird die Einheit während der Überwachungsphase STAB1 wieder vorläufig in Betrieb genommen. Während der Überwachungsphase ändert die wieder in Betrieb zu nehmende Einheit jedoch ihren Zustand von betriebsbereit RDY in gestört DEF, worauf die Überwachungsphase STAB1 abgebrochen wird und unmittelbar darauf eine nächste Sperrphase LOCK2 eingeleitet wird. Nach Ablauf dieser ersten Sperrphase LOCK2 wird die periphere Einheit während einer zweiten Überwachungsphase STAB2 wieder vorläufig in Betrieb genommen. Falls nach Beendigung dieser Überwachungsphase STAB2 keine weitere Störung auftritt, kann die periphere Einheit wieder endgültig in Betrieb genommen werden.

## Patentansprüche

1. Verfahren zur Behandlung von als gestört gemeldeten peripheren Einheiten in einem Kommunikationssystem, bei dem eine Wiederinbetriebnahmeprozedur (RP) gestartet wird,
- bei welcher eine Sperrphase (LOCK) zur vorläufigen Außerbetriebnahme der betreffenden peripheren Einheit eingeleitet wird, und
- bei welcher **nach Beendigung der Sperrphase** (LOCK) eine Überwachungsphase (STAB), während der Prüfungen auf Störungen vorgenommen werden, eingeleitet wird,
- wobei bei Störungsfreiheit eine endgültige Inbetriebnahme (IN_SERV) im Anschluß an die Überwachungsphase (STAB) erfolgt,
**dadurch gekennzeichnet, daß**
- der Durchlauf einer Sperrphase (LOCK) und nachfolgender Überwachungsphase (STAB) einen Inbetriebnahmeversuch darstellen,
- ein Wiederholungszähler (CNT) zur Erfassung der Anzahl (m) von **Inbetriebnahmeversuchen** vorgesehen ist, welcher zu Beginn der Wiederinbetriebnahmeprozedur (RP) initialisiert wird,
- im Falle einer Störung während der Überwachungsphase (STAB) der Zählerstand (m) des Wiederholungszählers (CNT) mit einem Schwellwert (mₘₐₓ) verglichen wird, wobei eine endgültige Außerbetriebnahme (OFF_SERV) erfolgt, wenn der Zählerstand (m) des Wiederholungszählers (CNT) den Schwellwert (mₘₐₓ) überschreitet, und andernfalls der Wiederholungszähler (CNT) weitergeschaltet wird und ein erneuter Inbetriebnahmeversuch erfolgt,
- wobei die Dauer (tₛ) jeder Sperrphase (LOCK) vom Zählerstand (m) des Wiederholungszählers (CNT) abhängig ist.

2. Verfahren zur Behandlung von als gestört gemeldeten peripheren Einheiten in Kommunikationssystemen nach Anspruch 1, **dadurch gekennzeichnet, daß** der Wiederholungszählers (CNT) im Zuge des Starts der Wiederinbetriebnahmeprozedur (RP) initialisiert wird.

3. Verfahren zur Behandlung von als gestört gemeldeten peripheren Einheiten in einem Kommunikationssystem nach Anspruch 1 oder 2,
**dadurch gekennzeichnet, daß** die peripheren Einheiten zu folgenden Hierarchieebenen zugeordnet werden:
a) Anschlußeinheit,
b) Baugruppe,
c) Schaltkreis,
d) Endgerät.

4. Verfahren zur Behandlung von als gestört gemeldeten peripheren Einheiten in einem Kommunikationssystem nach Anspruch 3,
**dadurch gekennzeichnet, daß** für die Dauer (tₛ) der Sperrphasen (LOCK) hierarchieebenenspezifische Zeitserien verwendet werden.

5. Verfahren zur Behandlung von als gestört gemeldeten peripheren Einheiten in einem Kommunikationssystem nach Anspruch 3 oder 4,
**dadurch gekennzeichnet, daß** die Dauer (tᵤ) der Überwachungsphasen (STAB) hierarchieebenenspezifisch eingestellt werden.

6. Verfahren zur Behandlung von als gestört gemeldeten peripheren Einheiten in Kommunikationssystemen nach einem der Ansprüche 1 bis 5,
**dadurch gekennzeichnet, daß** die Dauer (tₛ) der ersten drei Sperrphasen (STAB) jeweils kürzer als eine Validierungszeit für eine Alarmauslösung ist.

7. Verfahren zur Behandlung von als gestört gemeldeten peripheren Einheiten in einem Kommunikationssystem nach einem der Ansprüche 1 bis 6,
**dadurch gekennzeichnet, daß** die peripheren Einheiten durch eine Fehlererkennungseinrichtung überwacht werden, welche mit einem Störungsstatistikzähler einer Fehleranalyseeinrichtung zusammenwirkt, und daß der Störungsstatistikzähler bei jeder endgültigen Inbetriebnahme (IN_SERV) zurückgesetzt wird, und daß der Start der Wiederinbetriebnahmeprozedur (RP) bei Überlauf des Störungsstatistikzählers erfolgt.

8. Verfahren zur Behandlung von als gestört gemeldeten peripheren Einheiten in einem Kommunikationssystemen nach einem der Ansprüche 1 bis 7,
**dadurch gekennzeichnet, daß** der Start der Wiederinbetriebnahmeprozedur (RP) auf Veranlassung einer Routineprüfsteuerung, welche Hintergrundtests für regelmäßige Überprüfungen von Hardware-Funktionen vornimmt, nach negativen Testresultaten erfolgt.

9. Verfahren zur Behandlung von als gestört gemeldeten peripheren Einheiten in einem Kommunikationssystem nach einem der Ansprüche 1 bis 8,
**dadurch gekennzeichnet, daß** Start der Wiederinbetriebnahmeprozedur (RP) nach direktem Sperren durch eine zentrale Geräteverwaltung erfolgt.

10. Verfahren zur Behandlung von als gestört gemeldeten peripheren Einheiten in einem Kommunikationssystem nach einem der Ansprüche 1 bis 9,
**dadurch gekennzeichnet, daß** wieder in Betrieb zu nehmende periphere Einheiten geprüft werden, ob sie für eine Wiederinbetriebnahme qualifiziert sind und daß ein Start der Wiederinbetriebnahmeprozedur (RP) nur bei positivem Prüfergebnis erfolgt.

## Claims

1. Method for dealing with peripheral units reported as defective in a communication system, in which a restarting procedure (RP) is started,
- in which a locked phase (LOCK) is initiated for temporarily taking the relevant peripheral unit out of service, and
- in which, after the locked phase (LOCK) has ended, a monitoring phase (STAB) during which tests for faults are carried out is initiated,
- where, in the case of freedom from faults, a final start-up (IN_SERV) takes place following the monitoring phase (STAB),
**characterized in that**,
- the running of a locked phase (LOCK) and subsequent monitoring phase (STAB) represent a start-up attempt,
- a repetition counter (CNT) for counting the number (m) of start-up attempts is provided, and is initialized at the start of the restarting procedure (RP),
- in the case of a fault during the monitoring phase (STAB), the count (m) of the repetition counter (CNT) is compared with a threshold value (mₘₐₓ), where a final taking-out-of-service (OFF_SERV) takes place if the count (m) of the repetition counter (CNT) exceeds the threshold value (mₘₐₓ), and, otherwise, the repetition counter (CNT) is incremented and another start-up attempt takes place,
- the duration (tₛ) of each locked phase (LOCK) being dependent on the count (m) of the repetition counter (CNT).

2. Method for dealing with peripheral units reported as defective in communication systems according to Claim 1, **characterized in that** the repetition counter (CNT) is initialized in the course of the start of the restarting procedure (RP).

3. Method for dealing with peripheral units reported as defective in a communication system according to Claim 1 or 2, **characterized in that** the peripheral units are allocated to the following hierarchy levels:
a) line unit,
b) assembly,
c) circuit,
d) terminal.

4. Method for dealing with peripheral units reported as defective in a communication system according to Claim 3, **characterized in that** hierarchy-level-specific time series are used for the duration (tₛ) of the locked phases (LOCK).

5. Method for dealing with peripheral units reported as defective in a communication system according to Claim 3 or 4, **characterized in that** the duration (tᵤ) of the monitoring phases (STAB) is set in a hierarchy-level-specific manner.

6. Method for dealing with peripheral units reported as defective in communication systems according to one of Claims 1 to 5, **characterized in that** the duration (tₛ) of the first three locked phases (STAB) is in each case shorter than a validation time for the triggering of an alarm.

7. Method for dealing with peripheral units reported as defective in a communication system according to one of Claims 1 to 6, **characterized in that** the peripheral units are monitored by a fault detection device which interacts with a fault statistics counter of a fault analysis device, and **in that** the fault statistics counter is reset with each final start-up (IN_SERV), and **in that** the restarting procedure (RP) is started when the fault statistics counter overflows.

8. Method for dealing with peripheral units reported as defective in a communication system according to one of Claims 1 to 7, **characterized in that** the restarting procedure (RP) is started on initiation of a routine test control which conducts background tests for regular checks of hardware functions, after negative test results.

9. Method for dealing with peripheral units reported as defective in a communication system according to one of Claims 1 to 8, **characterized in that** the restarting procedure (RP) is started after direct locking by a central device administration.

10. Method for dealing with peripheral units reported as defective in a communication system according to one of Claims 1 to 9, **characterized in that** peripheral units to be taken into service again are checked as to whether they are qualified for a restart and **in that** the restarting procedure (RP) is only started with a positive test result.

## Revendications

1. Procédé pour le traitement d'unités périphériques signalées défectueuses dans un système de communication, dans lequel une procédure de remise en service (RP) est lancée,
- dans laquelle une phase de blocage (LOCK) est amorcée pour la mise hors service provisoire de l'unité périphérique concernée, et
- dans laquelle, après la fin de la phase de blocage (LOCK), on amorce une phase de contrôle (STAB) pendant laquelle on effectue des essais d'incidents,
- dans lequel, en cas d'absence d'incident, une mise en service (IN_SERV) définitive intervient à la suite de la phase de contrôle (STAB),
**caractérisé en ce que**
- le passage d'une phase de blocage (LOCK) et d'une phase de contrôle (STAB) consécutive représentent un essai de mise en service,
- il est prévu un compteur d'itérations (CNT) pour l'enregistrement du nombre (m) d'essais de mise en service, qui est initialisé au début de la procédure de remise en service (RP),
- dans le cas d'un incident survenant pendant la phase de contrôle (STAB), l'indication (m) du compteur d'itérations (CNT) est comparée avec une valeur seuil (mₘₐₓ), une mise hors service (OFF_SERV) définitive intervenant lorsque l'indication du compteur (m) d'itérations (CNT) dépasse la valeur seuil (mₘₐₓ), et autrement le compteur d'itérations (CNT) est réenclenché et on effectue un nouvel essai de mise en service,
- la durée (tₛ) de chaque phase de blocage (LOCK) étant dépendante de l'indication (m) du compteur d'itérations (CNT).

2. Procédé pour le traitement d'unités périphériques signalées défectueuses dans des systèmes de communication selon la revendication 1, **caractérisé en ce que** le compteur d'itérations (CNT) est initialisé dans le cadre du démarrage de la procédure de remise en service (RP).

3. Procédé pour le traitement d'unités périphériques signalées défectueuses dans un système de communication selon la revendication 1 ou 2,
**caractérisé en ce que** les unités périphériques sont attribuées aux niveaux de hiérarchie suivants :
a) unité de raccordement,
b) ensemble,
c) circuit,
d) terminal.

4. Procédé pour le traitement d'unités périphériques signalées défectueuses dans un système de communication selon la revendication 3,
**caractérisé en ce que** des séries de temps spécifiques à des niveaux de hiérarchie sont utilisées pour la durée (tₛ) des phases de blocage (LOCK).

5. Procédé pour le traitement d'unités périphériques signalées défectueuses dans un système de communication selon la revendication 3 ou 4,
**caractérisé en ce que** la durée (tᵤ) des phases de contrôle (STAB) est réglée de façon spécifique aux niveaux de hiérarchie.

6. Procédé pour le traitement d'unités périphériques signalées défectueuses dans des systèmes de communication selon l'une quelconque des revendications 1 à 5,
**caractérisé en ce que** la durée (tₛ) des trois premières phases de blocage (STAB) est respectivement plus courte qu'un temps de validation pour un déclenchement d'alarme.

7. Procédé pour le traitement d'unités périphériques signalées défectueuses dans un système de communication selon l'une quelconque des revendications 1 à 6,
**caractérisé en ce que** les unités périphériques sont contrôlées par un dispositif de détection de défauts qui coopère avec un compteur de statistique d'incidents d'un dispositif d'analyse de défauts, et **en ce que** le compteur de statistique d'incidents est remis à zéro lors de chaque mise en service définitive (IN_SERV), et **en ce que** le démarrage de la procédure de remise en service (RP) s'effectue en cas de dépassement de capacité du compteur de statistique d'incidents.

8. Procédé pour le traitement d'unités périphériques signalées défectueuses dans un système de communication selon l'une quelconque des revendications 1 à 7,
**caractérisé en ce que** le démarrage de la procédure de remise en service (RP) intervient après des résultats de test négatifs à la demande d'une commande d'essai de routine, qui effectue des tests de fond pour des contrôles réguliers de fonctions de matériel.

9. Procédé pour le traitement d'unités périphériques signalées défectueuses dans un système de communication selon l'une quelconque des revendications 1 à 8,
**caractérisé en ce que** le démarrage de la procédure de remise en service (RP) intervient après un blocage direct par une gestion centrale d'appareils.

10. Procédé pour le traitement d'unités périphériques signalées défectueuses dans un système de communication selon l'une quelconque des revendications 1 à 9,
**caractérisé en ce que** des unités périphériques à remettre en service sont testées pour savoir si elles sont qualifiées pour la remise en service et **en ce qu'**un démarrage de la procédure de remise en service (RP) n'intervient qu'avec un résultat de test positif.
